# EUROPEAN PATENT SPECIFICATION

(11) **EP 1 033 423 B1**
(45) Date of publication and mention of the grant of the patent: **22.02.2006**
(21) Application number: 99943442.6
(22) Date of filing: 21.09.1999
(51) Int. Cl.: D01F 9/14

(54) **METHOD FOR PRODUCING MESOPHASE PITCH ACTIVE CARBON FIBER, MESOPHASE PITCH ACTIVE CARBON FIBER, ELECTRIC DOUBLE-LAYER CAPACITOR**
VERFAHREN ZUR HERSTELLUNG VON AUF MESOPHASENPECH BASIERENDEN AKTIVEN KOHLENSTOFFFASERN, AUF MESOPHASENPECH BASIERENDE AKTIVE KOHLENSTOFFFASERN, ELEKTRISCHER DOPPELSCHICHTKONDENSATOR
PROCEDE DE PRODUCTION DE FIBRE DE CARBONE ACTIVE A BASE DE BRAI EN PHASE MESOMORPHE, FIBRE DE CARBONE ACTIVE A BASE DE BRAI EN PHASE MESOMORPHE, CONDENSATEUR ELECTRIQUE A DOUBLE COUCHE

(30) Priority: 22.09.1998 JP 28475798
(43) Date of publication of application: 06.09.2000
(73) Proprietor: HONDA MOTOR CO., Ltd., Tokyo (JP)
(72) Inventor: MAEDA, Takashi, Petoca, Ltd., Kashima-gun, Ibaraki 314-0198 (JP); KAWABUCHI, Yuji, Kashima-gun, Ibaraki 314-0198 (JP); HAGA, Takahiro, Kashima-gun, Ibaraki 314-0198 (JP); HOSOTSUBO, Tomiji, Kashima-gun, Ibaraki 314-0198 (JP)
(74) Representative: Vossius & Partner
(86) International application number: PCT/JP1999/005145
(87) International publication number: WO 2000/017426

(56) References cited:
- JP-A- 10 121 336
- JP-A- 10 152 311
- JP-A- 11 222 732

## Description

The present invention relates to a production of a mesophase pitch based active carbon fiber suitable for use in an electrode material of an electric double layer capacitor. More particularly, the present invention relates to a process for producing an active carbon fiber, which, when used as an electrode material, is capable of realizing large charge and discharge capacities per weight and per volume, and also relates to such an active carbon fiber and an electric double layer capacitor including an electrode in which the active carbon fiber is used.

In recent years, new electronic equipments such as a portable telephone and a notebook-size personal computer have been developed in succession. In accordance with the development competition intended to reduce the volume and weight of these goods and to make them portable, the miniaturization, while ensuring high performance, of IC memory, microcomputer and other items built therein is being promoted.

In this connection, elements such as IC memory, and microcomputers have the danger of causing the electronic equipments to suffer from misfunctioning such as memory cancellation or operation termination at the time of instantaneous power cut.

Actually, computer equipments, unless appropriate measures are taken, suffer from operation termination and memory loss only if a voltage drop as small as 10 to 20% is continued for a short period of 0.003 to 0.02 second with the result that the functions of the electronic equipments are paralyzed.

As a countermeasure, for example, a Ni-Cd battery or an aluminum electrolytic condenser has been employed as a backup power source. However, such a backup power source has not been satisfactory from the viewpoint of range of use temperature, charge and discharge cycles, capacity, charge and discharge rapidity and cost.

An electric double layer capacitor has been developed to meet market needs in the above circumstances.

At the initial stage, active carbon was commonly used as an electrode material therein. However, recently, attention is being drawn toward an electric double layer capacitor in which use is made of an active carbon fiber having an increased specific surface area.

The application thereof to not only conventional small-power fields but also large-capacity fields, for example, an auxiliary power source for the battery of electric automobiles is being studied. The current stage is such that some passenger cars on which capacitors are mounted for the purpose of charging the regenerative kinetic energy produced at the time of deceleration to the capacitor and contrarily discharging the energy at the time of acceleration to thereby support the engine output are shown as reference exhibits.

The history of researches on the electric double layer goes back to Helmholtz, as old as 1879. Generally, when two phases different from each other are brought into contact, positive and negative charges are arranged at the interface, with a small interval therebetween. The charge distribution produced at the interface is called the electric double layer.

The electric double layer capacitor is one in which voltage is applied to the electric double layer to thereby accumulate charges. However, a prolonged period of time has been taken for the practical use thereof. It was only the beginning of the 1980s when the development of a condenser with a large capacity of Farad unit in which this principle was introduced was realized.

The electric double layer capacitor is a large-capacity condenser in which an electric double layer formed at an interface of an electrode and an electrolyte is utilized. The charging and discharging effected with the electric double layer capacitor are not accompanied by any chemical reaction made in conventional secondary batteries. Therefore, the internal resistance of the electric double layer capacitor is extremely low as compared with those of secondary batteries, so that a large-current discharging can be realized. Further, the electric double layer capacitor has the characteristic that there is no limit in charging and discharging frequency.

However, the most serious drawback of the electric double layer capacitor resides in that the energy density thereof is extremely low as compared with those of secondary batteries. Various investigations are now being conducted in order to accomplish an improvement in this respect.

Electric double layer capacitors are largely divided into two types, namely the one in which use is made of an organic electrolyte comprising an organic polar solvent such as propylene carbonate and, dissolved therein, an electrolytic substance such as lithium perchlorate or a quaternary ammonium salt and the other in which use is made of an electrolyte composed of an aqueous solution such as aqueous solution of sulfuric acid or an aqueous solution of potassium hydroxide.

In the use of the electrolyte composed of an aqueous solution, the capacity of the capacitor can be increased to about 1.3 to 2 times that exhibited in the use of the organic solvent electrolyte, and the internal resistance can be lowered to 1/5 - 1/10 of that exhibited in the use of the organic solvent electrolyte.

The reason for the capability of lowering the internal resistance in the use of the electrolyte composed of an aqueous solution is attributed to low electrical resistance of the aqueous solution electrolyte. However, the use of the aqueous solution electrolyte is disadvantageous in that the voltage can be increased only to about 1 V with the result that the quantity of accumulated energy per volume is small.

On the other hand, in the use of the organic solvent electrolyte, the voltage of the electric double layer capacitor can be increased to a maximum of 3 V or more to thereby enable increasing the quantity of energy stored per volume of capacitor (quantity of stored energy determined by the formula: 1/2CV² wherein C represents the capacity of capacitor and V represents the voltage) . Therefore, the organic solvent electrolyte is advantageous over the aqueous solution electrolyte from the viewpoint of an increase of energy density per volume.

With respect to the electrode material for use in the electric double layer capacitor, active carbon or active carbon fiber having a large specific surface area is considered to be the most suitable therefor, and, in various fields, investigations for optimization of carbon material are being promoted vigorously.

The electrode material for use in the electric double layer capacitor is generally produced from active carbon having a large specific surface area, which is obtained by providing a hardly graphitizable carbon material (carbon material whose graphitization is difficult, known as a hard carbon) such as coconut husk, coal or a phenolic resin as a raw material and subjecting the same to gas activation generally using, for example, steam or carbon dioxide.

In the electric double layer capacitor in which this active carbon is used as an electrode material, pores produced by the carbon-removing phenomenon attributed to a reaction between the carbon material and steam or carbon dioxide increase the interface at which the electric double layer is formed to thereby enable increasing the charge and discharge capacities per weight.

However, generally, for obtaining an electrode for use in an electric double layer capacitor having a large discharge capacity per weight, it is requisite to employ an active carbon having a specific surface area, as measured by the BET method, of at least 2000 m²/g. This active carbon requires activation condition wherein the activation yield is as low as 20% by weight or less, thereby involving the problem of not only increasing the production cost for active carbon to be obtained but also causing the carbon material per se to have such a low bulk density that the bulk density of the electrode material cannot be enhanced.

According to measurements conducted by the inventor, the discharge capacity, in an organic solvent, of the electrode material composed of an active carbon prepared from the above hardly graphitizable carbon material as a raw material and having a BET specific surface area of 2000 m²/g is only about 30 F/g. This value is below the value expected from the above specific surface area.

This is considered to suggest that not all the specific surface area measured by the BET method is utilized in the formation of the electric double layer.

With respect to the production of an active carbon, the method of activating a carbon fiber in the presence of an alkali metal compound in order to increase the specific surface area thereof (hereinafter referred to as "alkali activation") was proposed (see Japanese Patent Laid-open Publication No. 1 (1989)-139865).

Further, attempts have been made to apply this technology to a graphitizable carbon material such as a carbon material obtained by carbonizing pitch, especially mesophase pitch. For example, Japanese Patent Laid-open Publication No. 5 (1993)-247731 discloses the production of an active carbon fiber of large specific surface area (especially, at least 200 m²/g) through a process comprising first spinning a pitch containing mesophase in a proportion of at least 50% (hereinafter may be generically referred to as "mesophase pitch") to thereby obtain a pitch fiber, subsequently infusibilizing/carbonizing the obtained pitch fiber to thereby obtain a carbon fiber (hereinafter may be generically referred to as "mesophase pitch based carbon fiber") and thereafter activating the carbon fiber in the presence of alkali.

Still further, in recent years, attempts have been made to use the active carbon fiber obtained by activating a graphitizable carbon material in the presence of alkali as an electrode material for use in an electric double layer capacitor. For example, Japanese Patent Laid-open Publication No. 5 (1993) -258996 proposes an electrode for electric double layer condenser, obtained by first activating a mesophase pitch based carbon fiber in the presence of alkali to thereby obtain an active carbon fiber having a specific surface area of at least 3000 m²/g, subsequently deliming the active carbon fiber with water or an acid, next pulverizing the delimed carbon fiber to a degree such that no fibrous form remains and thereafter molding the powder.

However, the production of a mesophase pitch based carbon fiber by alkali activation involves the problem that the activation yield is lowered by providing a large specific surface area and that, in the use as an electrode material of electric double layer capacitor, the bulk density thereof is low to thereby lower the charge and discharge capacities per volume.

The inventor et al., for overcoming the above problem, have proposed an electric double layer capacitor in which an active carbon fiber having a specific surface area of 500 to 2000 m²/g, obtained by alkali activation of a mesophase pitch based carbon fiber, is used as an electrode material (see Japanese Patent Laid-open Publication No. 10 (1998)-121336). Also, they have proposed an electric double layer capacitor in which an active carbon fiber of specified pore distribution, obtained by milling a mesophase pitch based carbon fiber produced by a specified method and thereafter conducting alkali activation of the powder, is used as an electrode material (see Japanese Patent Laid-open Publication No. 11(1999)-222732).

These active carbon fibers are advantageous in that, in the use as an electrode material, high charging and discharging performance can be exhibited as compared with that of conventional active carbon fibers even if the specific surface area thereof is small, so that the charge and discharge capacities per volume can also be increased. However, the current situation is such that further enhancement of charging and discharging performance, especially increase of the charge and discharge capacities per weight and per volume, is desired with respect to the electric double layer capacitor including the electrode composed of these active carbon fibers as well.

The present invention has been made with a view toward solving the above problems of the prior art. Therefore an object of the present invention is to provide a process for producing an active carbon fiber which, when used as an electrode material, not only has a small specific surface area to thereby enable realizing a high bulk density but also exhibits excellent charging and discharging performance, especially capable of realizing large charge and discharge capacities per weight and per volume. Another object of the present invention is to provide such an active carbon fiber, and a further object of the present invention is to provide an electric double layer capacitor including the electrode made by using the active carbon fiber.

The process for producing a mesophase pitch based active carbon fiber according to the present invention comprises the steps of:
(I) carbonizing a mesophase pitch based infusibilized fiber in an inert gas at 600 to 900°C,
(II) activating the thus obtained carbon fiber in the presence of alkali in an inert gas at 500 to 900°C, cooling the reaction mixture to room temperature and removing unreacted alkali metal compound, and
(III) immersing the thus obtained mesophase pitch based active carbon fiber in an electrolyte and subjecting the immersed mesophase pitch based active carbon fiber to such a charge and discharge treatment that a voltage gradually increased until exceeding 2.5 V is applied at a constant current density to the mosophase pitch based active carbon fiber so that an electric double layer is formed at an interface of the mesophase pitch based active carbon fiber and the electrolyte to thereby effect a charging and thereafter a discharging is effected at a constant current density.

In the process for producing a mesophase pitch based active carbon fiber according to the present invention, it is preferred that the active carbon fiber obtained in the step (II) have a BET specific surface area of 30 to 1200 m²/g, especially 30 to 1000 m²/g, and still especially 50 to 850 m²/g. Further, the active carbon fiber obtained in the step (II) preferably has an average pore radius, calculated from t-plot of a nitrogen adsorption isotherm, of 0.2 to 1 nm, still preferably 0.6 to 1 nm.

Moreover, in the step (III) in the process for producing an active carbon fiber according to the present invention, the charging is preferably performed by applying a voltage gradually increased to 3.5 V in the electrolyte.

The active carbon fiber for use in an electrode of an electric double layer capacitor according to the present invention is characterized in that it is produced by the above process.

It is preferred that the active carbon fiber of the present invention have a BET specific surface area of 30 to 1200 m²/g, especially 30 to 1000 m²/g, and still especially 50 to 850 m²/g. Further, the active carbon fiber of the present invention preferably has an average pore radius, calculated from t-plot of a nitrogen adsorption isotherm, of 0.2 to 1 nm, still preferably 0.6 to 1 nm.

Moreover, preferably, the BET specific surface area and the average pore radius after the step (III) do not significantly different from those before the step (III).

The electric double layer capacitor of the present invention is characterized by including an electrode comprising the above mesophase pitch based active carbon fiber.

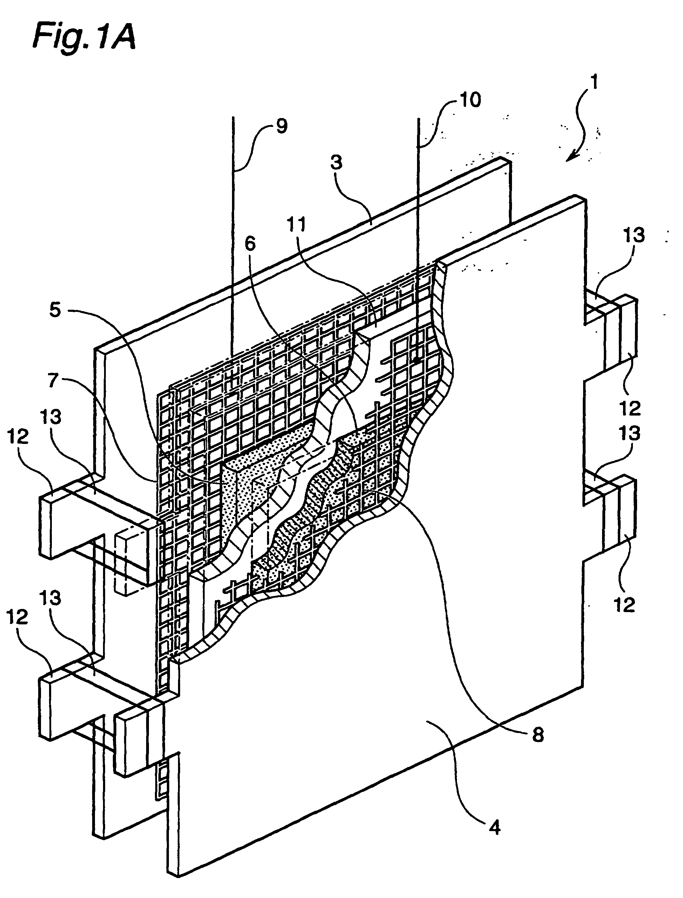

Fig. 1A shows a schematic perspective view of a preferred embodiment of electric double layer capacitor according to the present invention;

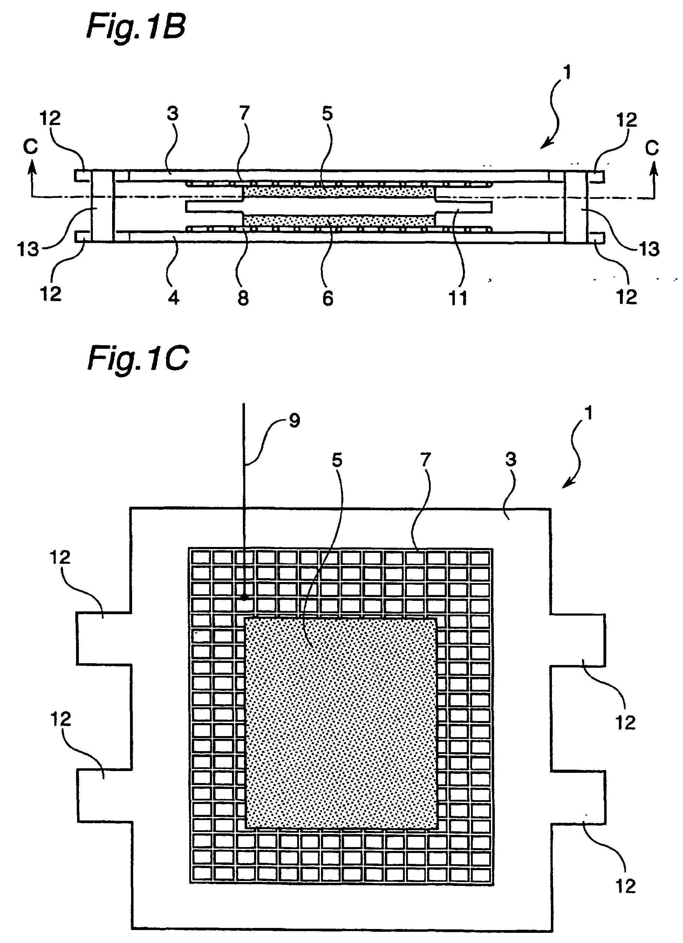

Fig. 1B shows a plan view of the electric double layer capacitor shown in Fig. 1A; and
Fig. 1C shows a sectional view taken in the direction of the arrow along the line C-C in Fig. 1B.

The present invention will be described in greater detail below.

The process for producing a mesophase pitch based active carbon fiber according to the present invention comprises:
(I) a carbonization step of carbonizing a mesophase pitch based infusibilized fiber in an inert gas at a specified temperature to thereby obtain a mesophase pitch based carbon fiber,
(II) an activation step of activating the thus obtained carbon fiber in the presence of alkali in the presence of alkali in an inert gas at 500 to 900°C, cooling the reaction mixture to room temperature and removing unreacted alkali metal compound, to thereby obtain a mesophase pitch based active carbon fiber, and
(III) a charge and discharge treatment step of subjecting the thus obtained active carbon fiber to a specified charge and discharge treatment.

Each of the steps of the process of the present invention will be described at length below.

### Carbonization step (I)

The mesophase pitch based infusibilized fiber for use as a starting material in the step (I) of the present invention can be produced by spinning mesophase pitch and infusibilizing the spun mesophase pitch (pitch fiber).

### 1) Pitch as starting material:

Although any of mesophase pitches, irrespective of being produced from petroleum or coal, can be used without any particular limitation as long as they are spinnable, it is preferred that this mesophase pitch contain an optically anisotropic phase in a proportion of at least 50%.

An active carbon fiber having a pore structure suitable for an electrode material of an electric double layer capacitor can be obtained from the mesophase pitch by converting it to a mesophase pitch based carbon fiber and activating the mesophase pitch based carbon fiber in the presence of alkali as described below, although the reason therefor is not apparent.

### 2) Spinning method:

The spinning of the mesophase pitch can be performed by any of the conventional spinning methods. Examples of the spinning methods include the melt spinning, centrifugal spinning and vortex spinning. The melt-blowing spinning method is especially preferably employed.

The orientation of graphite layer planes in the interior of the fiber is important with respect to the mesophase pitch based carbon fiber. The degree of this orientation can mostly be controlled during the spinning step by the pitch viscosity, spinning speed, cooling rate, nozzle structure, etc.

In the alkali activation, it is considered to be an important factor that an alkali metal compound widens spacing of graphite layers and intercalates thereinto. In order to effectively promote the activation, it is preferred that edges of the graphite layers be exposed on the fiber surface so as to make an alkali metal compound easily enter inside from between the edges.

Further, the orientation structure of graphite layer planes is presumed to also have an influence on the activation yield.

The melt-blowing spinning method can be stated as being preferable from the collective viewpoint taking into account not only the above but also the production costs inclusive of construction and operating costs for spinning apparatus and the quality matter inclusive of the control of fiber diameter.

This melt-blowing spinning method is especially suitable to the production of a carbon fiber mass with the form of a mat or a felt.

### 3) Infusibilization:

The pitch is a thermoplastic organic compound, so that, for conducting thermal treatment (carbonization) with allowing the same to maintain its fibrous form, infusibilization must be carried out after spinning.

This infusibilization, although can be effected continuously in the liquid or gas phase by customary techniques, is generally carried out in an oxidative atmosphere of air, oxygen, NO₂ or other gas.

For example, the infusibilization in air is performed under such conditions that the average temperature rising rate is in the range of 1 to 15°C/min, preferably 3 to 12°C/min, and that the infusibilization temperature is in the range of 100 to 350°C, preferably 150 to 300°C.

If a pitch fiber spun, not having undergone infusibilization, is directly mixed with an alkali metal compound homogeneously and subjected to thermal treatment, the pitch fiber is re-melted in the heating step with the unfavorable result that the orientation of graphite layer planes formed in the spinning step is disordered and, in extreme instances, the fibrous form is lost.

In the carbonization step (I) of the present invention in which the thus obtained mesophase pitch based infusibilized fiber is carbonized, the conditions thereof are not particularly limited as long as a carbon fiber from which an active carbon fiber having properties suitable for an electrode material of electric double layer capacitor can be produced by the alkali activation step (II) and charge and discharge treatment step (III) described below can be provided. Accordingly, the carbonization of pitch fiber may be conducted in customary conditions, for example, in an inert gas such as nitrogen at 350 to 2000°C, but in the context of this invention, it is carried out in an inert gas at 600 to 900°C, especially 650 to 800°C. from the above viewpoint.

Mesophase pitch based carbon fiber having been carbonized at temperatures which are outside the above carbonization temperature range tends to decrease the proportion of small pores in the mesophase pitch based active carbon fiber obtained by the alkali activation step (II) described later. The use of this active carbon fiber may fail to attain an exertion of satisfactory charge and discharge capacity increasing effect in the subsequent charge and discharge step (III) as described later.

More specifically, when the active carbon fiber from the mesophase pitch based carbon fiber having been carbonized at temperatures which are outside the above carbonization temperature range is used in an electrode of electric double layer capacitor, it is difficult, even if the charge and discharge step (III) is performed by increasing the charging voltage to 3.5 V, to attain such a satisfactory charge and discharge capacity increasing effect that the charge and discharge capacities per weight at the charging at a constant current density with the voltage increased to 2.5 V can be increased as much as at least 10% when the specific surface area is in the range of 30 to 1000 m²/g and as much as at least 3% when the specific surface area exceeds 1000 m²/g and is up to 1200 m²/g.

When the carbonization temperature exceeds 900°C, unfavorably, not only does the graphite structure of the carbon fiber grow to an extent beyond necessity to thereby extremely retard the activation velocity with the result that the reaction requires a prolonged period of time and the carbonization cost is increased.

On the other hand, when the carbonization temperature is below 600°C, although the progress rate of activation is high, substantially no increase of charge and discharge capacities by the charge and discharge treatment step (III) is recognized. Thus, unfavorably, the specific surface area must be enlarged for increasing the charge and discharge capacities to thereby invite lowering of activation yield and cost increase.

Further, the lowering of activation yield is accompanied by lowering of the bulk density to thereby decrease the charge and discharge capacities per volume as well.

An active carbon fiber suitable for use in an electrode material can be obtained from the thus obtained mesophase pitch based carbon fiber, even if it remains in the form of a mat or a felt, by the activation step (II) and charge and discharge step (III) described later.

### 4) Milling:

Milling can be performed prior to the activation step (II) in order to effect homogeneous mixing with an alkali metal compound (activation auxiliary) in the activation step (II) and to increase the uniformity of specific surface area and the bulk density of active carbon fiber after the activation reaction.

In the milling, the particle size in terms of average particle diameter as measured by laser diffractometry is preferably in the range of 5 to 50 µm, still preferably 10 to 30 µm.

When the average particle diameter exceeds 50 µm, it is likely that advance of the activation reaction into the internal part of particles is difficult and that the bulk density of the electrode material cannot be increased, sufficiently. On the other hand, when the average particle diameter is extremely small below 5 µm, it is likely that control of the activation reaction and washing, after activation, etc. become difficult.

The milling can be effectively performed by the use of a high-speed rotary mill such as Victory mill, a jet mill or the like. Although the milling can also be effected by Henschel mixer, a ball mill, grinding and the like, these are not preferable because a pressure is exerted along the direction of fiber diameter to thereby increase the occurrence of cracking along the direction of fiber axis and lower the activation efficiency and homogeneity.

Further, these require a prolonged period of time in the milling, and hence can hardly be stated as being suitable milling means.

For example, the method in which fibers are chopped by rotating a rotor equipped with a blade at a high speed is suitable for highly efficient milling.

The fiber length can be controlled by regulating the rotating speed of the rotor, the blade angle, etc.

In the activation step (II) of the present invention, the thus obtained mesophase pitch based carbon fiber is activated in the presence of alkali.

### Activation step (II)

Examples of the alkali metal compound for use in the activation step (II) of the present invention include potassium hydroxide, potassium carbonate, potassium nitrite, potassium sulfate and potassium chloride. Of these, potassium hydroxide is especially preferred.

The alkali metal compound is preferably used in a weight ratio to carbon fiber of 0.5 to 5, still preferably 1 to 4.

When the ratio of alkali metal compound is below 0.5, it is likely for the efficiency of pore formation to become low. On the other hand, the addition thereof in excess of 5 is unfavorable from the viewpoint of not only cost increase for post-treatment but also the maintenance and safety of apparatus therefor.

The activation step (II) can be carried out, for example, by homogeneously mixing the carbon fiber with the alkali metal compound in the above weight ratio and thereafter heating the mixture in an inert gas such as nitrogen at 500 to 900°C, preferably 600 to 800°C.

When the activation temperature is lower than 500°C, the advance of the reaction is restrained. On the other hand, exceeding 900°C is unfavorable from the viewpoint of precipitation of metallic potassium and corrosion of apparatus.

The danger attributed to the alkali metal remaining after the activation can be reduced by, for example, treating in an atmosphere of inert gas containing carbon dioxide at a temperature not greater than the activation reaction temperature after the completion of the activation reaction.

After the activation, the thus obtained mesophase pitch based active carbon fiber is subjected to cooling of the reaction mixture to room temperature, removal of unreacted alkali metal compound by, for example, washing with water and the charge and discharge step (III). The mesophase pitch based active carbon fiber has a specified surface structure, for example, specified specific surface area and pore distribution.

### 1) Specific surface area of active carbon fiber:

It is preferred that the active carbon fiber obtained by the activation step (II) of the present invention have a specific surface area of 30 to 1200 m²/g, especially 30 to 1000 m²/g, and still especially 50 to 850 m²/g.

Namely, according to the observation of the inventors, the smaller the specific surface area of the active carbon fiber, the higher the ratio of increase of charge and discharge capacities attained by the charge and discharge step (III) described later (see the charge and discharge capacities after the charge and discharge treatment step in Examples of this specification) .

There is a correlation, if not univocal, between the absolute value of the charge and discharge capacities and the specific surface area. Thus, a specific surface area of less than 30 m²/g is not preferable because, even if the charge and discharge capacities are satisfactorily increased in the charge and discharge step (III), the value thereof is as small as 20 F/g or less.

On the other hand, when the specific surface area exceeds 1000 m²/g, the effect of increasing charge and discharge capacities in the charge and discharge treatment step (III) is suppressed. Further, when the specific surface area exceeds 1200 m²/g, the increase of charge and discharge capacities that can be expected on the basis of specific surface area cannot be realized. More specifically, when this active carbon fiber is used in an electrode of electric double layer capacitor, it is difficult, even if the charge and discharge treatment step (III) is performed by increasing the charging voltage to 3.5 V, to attain such a satisfactory charge and discharge capacity increasing effect that the discharge capacity per weight at the charging at a constant current density with the voltage gradually increased to 2.5 V can be increased as much as at least 10% when the specific surface area is in the range of 30 to 1000 m²/g and as much as at least 3% when the specific surface area exceeds 1000 m²/g and is up to 1200 m²/g.

Moreover, when the specific surface area exceeds 1200 m²/g, the activation is time-consuming and the activation yield is lowered, so that attaining desired charge and discharge capacities per volume tends to be difficult.

In this specification, the specific surface area is a value measured by the BET method based on nitrogen adsorption and, taking measuring accuracy into account, expressed by three digits of significant figure (provided that, with respect to less than one hundred, fractions of .5 and over are counted as a unit and the rest is cut away).

### 2) Pore distribution of active carbon fiber:

The average pore radius of the active carbon fiber obtained by the activation step (II) of the present invention is preferably in the range of 0.2 to 1 nm, still preferably 0.6 to 1 nm.

When the average pore radius exceeds 1 nm, the effect of increasing charge and discharge capacities, attained by the charge and discharge treatment step (III) described later, tends to be extremely slight.

On the other hand, when the average pore radius is less than 0.2 nm, the specific surface area is extremely small although the effect of increasing charge and discharge capacities in the charge and discharge treatment step (III) is conspicuous with the unfavorable result that the absolute value of charge and discharge capacities of the active carbon fiber as a final product is small.

In the present invention, the average pore radius is a value calculated from t-plot of a nitrogen adsorption isotherm at liquid nitrogen temperature, based on the results of the nitrogen adsorption method employed in the measuring of the BET specific surface area.

In the present invention, the mesophase pitch based active carbon fiber obtained in this activation step (II) is subjected to specified charge and discharge treatment performed in the charge and discharge treatment step (III) .

### Charge and discharge treatment step (III)

In the charge and discharge treatment step (III) of the present invention, the active carbon fiber obtained in the activation step (II) is immersed in an electrolyte and subjected to such a charge and discharge treatment that a voltage gradually increased until exceeding 2.5 V is applied at a constant current density to the active carbon fiber so that an electric double layer is formed at an interface of the active carbon fiber and the electrolyte to thereby effect a charging and thereafter a discharging is effected at a constant current density.

In this charge and discharge treatment step (III), the active carbon fiber may be used directly as an electrode in the formation of electric double layer, or may be mixed with a binder and molded into a molding (electrode) before the use in the formation of electric double layer, as described later.

In this charge and discharge treatment step (III), although any of common electrolytes can be employed, the use of organic nonaqueous electrolytes described below is especially preferred from the viewpoint that a high voltage can be applied.

Organic solvents for use in such organic nonaqueous electrolytes are not particularly limited and may be, for example, any of the organic solvents set forth later. However, it is especially preferred to employ organic polar solvents such as ethylene carbonate, γ-butyrolactone, sulfolane, dimethylformamide, 3-methylsulfolane and propylene carbonate.

Electrolytic substances for use in such electrolytes are not particularly limited and can be, for example, any of the salts described later. EtN₄BF₄ and LiClO₄ can be mentioned as preferred examples thereof.

In the use of an organic nonaqueous polar solvent such as propylene carbonate, the concentration of electrolytic substance is preferably in the range of 0.5 to 3 M/L, still preferably 1 to 2 M/L.

In the charge and discharge treatment, the voltage applied to the active carbon fiber is gradually increased from the state of no voltage application to over 2.5 V, preferably over 2.5 V but not greater than 4.0 V, and still preferably 3.5 V.

The rate of voltage increase is so set that the density of current flowing through the electrode comprising the active carbon fiber is constant. This current density is preferably in the range of 0.1 to 100 mA/cm², still preferably 1 to 100 mA/cm².

The charge and discharge treatment step (III) of the present invention can be performed with the use of electric double layer capacitor (described later), for example, shown in appended Figs. 1A to 1C.

Specifically, in the charge and discharge treatment step (III) using such electric double layer capacitor 1 shown in appended Figs. 1A to 1C, the mesophase pitch based active carbon fiber obtained in the activation step (II) is formed directly, or after being mixed with a binder and molded into, for example, a sheet, into electrodes 5, 6 and the charging and discharging are carried out so that the charge and discharge treatment of the active carbon fiber is effected.

In this charge and discharge treatment, the charging is carried out in such a manner that the potential difference between the electrodes 5,6 is gradually increased from the state of 0 V to over 2.5 V, especially preferably 3.5 V, so as to allow the current density to be constant and that, after the voltage reaches a given value, the voltage is maintained until a stable state is reached. Thereafter, the discharging is conducted by controlling the velocity of drop of potential difference between the two electrodes so as to allow the current density to be constant.

The now apparent charge and discharge treatment step (III) of the present invention realizes a marked increase of charge and discharge capacities per volume over those of the active carbon fiber having an equivalent specific surface area but not having undergone this treatment.

More specifically, the use of the active carbon fiber obtained in the activation step (II) as electrodes of an electric double layer capacitor and subjected to the charge and discharge step (III) by increasing the charging voltage to, for example, 3.5 V enables increasing the discharge capacity per weight, which is measured at the charging at a constant current density with the voltage increased to 2.5 V, followed by the discharging at a constant current density (for example, the current density at charging and discharging: 100 mA/cm²), as much as at least 10% when the specific surface area is in the range of 30 to 1000 m²/g and as much as at least 3% when the specific surface area exceeds 1000 m²/g and is up to 1200 m²/g.

The discharge capacity per weight of the active carbon fiber can be measured by the use of, for example, electric double layer capacitor shown in appended Figs. 1A to 1C along with the electrolyte selected from among those examples set forth in the above charge and discharge treatment.

Specifically, the active carbon fiber to be measured with respect to the charge and discharge capacities, directly or after being mixed with a binder and molded into, for example, a sheet, is used as electrodes 5, 6 of electric double layer capacitor 1 shown in appended Figs. 1A to 1C. The charging is carried out in such a manner that the potential difference between the electrodes 5,6 is gradually increased from the state of 0 V to 2.5 V so as to allow the current density to be constant and that, after the voltage reaches a given value, the voltage is maintained until a stable state is reached. Thereafter, the discharging is conducted by controlling the velocity of drop of potential difference between the two electrodes so as to allow the current density to be constant.

The discharge capacity of the electrodes 5,6 is calculated from the slope of discharge curve (curve showing the potential difference between the two electrodes vs. discharging time) obtained by the above charging and discharging. The discharge capacity per weight (F/g) can be determined from the calculated value and the total weight of active carbon fiber used as the electrodes 5,6.

With respect to the mesophase pitch based active carbon fiber, it has been believed that the charge and discharge capacity per weight is highly associated with the specific surface area and pore distribution.

It has also been believed that an active carbon fiber of large specific surface area (generally at least 2000 m²/g) in which pores with a certain specified size for permitting infiltration of an electrolyte (generally having an average pore radius of at least 1 nm) are distributed in a large proportion is desirable for use as an electrode material of electric double layer capacitor.

However, the inventors' investigations have revealed that the mesophase pitch based active carbon fiber obtained in the activation step (II), when having a small specific surface area as measured by the BET method (up to 1200 m²/g, especially up to 1000 m²/g) and when containing micropores having been regarded as being unsuitable to the formation of an electric double layer in a large proportion and thus having a small average pore radius calculated from t-plot of a nitrogen adsorption isotherm (average pore radius: 0.2 to 1 nm), exhibits a marked effect of increasing charge and discharge capacities in the charge and discharge treatment step (III). Although, when the active carbon fiber having been subjected to the charge and discharge treatment step (III) is subjected to the charge and discharge treatment step (III) once more, the increasing effect is not so high as in the initial treatment, substantially constant high charge and discharge capacities can be maintained thereafter under regular charging and discharging conditions. Despite these, after the charge and discharge treatment step (III), there is no significant change recognized in the specific surface area and average pore radius of the active carbon fiber, measured by the aforementioned methods.

With respect to this phenomenon, although the clear cause thereof has not yet been elucidated, it can be presumed that some change exerting no significant influence on the average pore radius and specific surface area is made on the structure and/or internal-surface properties of pores with small radii which are originally not associated with the formation of electric double layer by virtue of the charge and discharge treatment performed at a high voltage exceeding 2.5 V in the charge and discharge treatment step (III) with the result that these small pores come to contribute to charge and discharge capacities in cooperation with the pores with large radii so as to realize a marked increase of charge and discharge capacities.

The mesophase pitch based active carbon fiber of the present invention can be produced by the above process of the present invention.

The mesophase pitch based active carbon fiber of the present invention preferably has an average pore radius, calculated from t-plot of a nitrogen adsorption isotherm, of 0.2 to 1 nm, still preferably 0.6 to 1.0 nm.

The employment of an average pore radius of less than 0.2 nm, although the increase of capacitor capacity at high voltage is large, is unfavorable because the specific surface area becomes extremely small to thereby reduce the absolute value of capacitor capacity. The upper limit of average pore radius of the mesophase pitch based active carbon fiber of the present invention is determined on the grounds that, with the use of an active carbon fiber of over 1 nm, it is difficult to attain the effect of increasing charge and discharge capacities in the charge and discharge treatment step (III).

The mesophase pitch based active carbon fiber of the present invention preferably has a discharge capacity per weight, exhibited when an electric double layer is formed, of 20 to 45 F/g, still preferably 30 to 45 F/g.

The electric double layer capacitor of the present invention includes the electrode comprising the above mesophase pitch based active carbon fiber.

In the present invention, the method of preparing the electrode is not particularly limited, and any of conventional electrode producing techniques can be used without modification.

For example, the electrode of the present invention can be produced by adding a binder such as polyethylene, polytetrafluoroethylene (PTFE) or polyvinylidene fluoride (PVDF) to the mesophase pitch based active carbon fiber, mixing them and forming the resultant mixture into a sheet or a plate by means of a pressure roller.

During the production of the electrode, for example, graphite powder or carbon blacks such as acetylene black can be added as a conductive material. Further, the mesophase pitch based active carbon fiber having the form of a mat or a felt can be coated with a conductive material such as aluminum by vapor deposition and formed into an electrode in order to enhance the current collectivity of the electrode. Still further, the active carbon fiber can be formed into paper and thereafter into an electrode.

A single-pole cell can be prepared by cutting the thus obtained electrode into desired size and shape, interposing a separator between counter electrodes, inserting them into a casing, injecting an electrolyte thereinto and caulking closure with the use of closing plates and gaskets.

It is preferred to employ an organic solvent type electrolyte to which a high voltage can be applied as the electrolyte for use in the electric double layer capacitor.

Examples of suitable organic solvents include propylene carbonate, γ-butyrolactone, dimethyl sulfoxide, dimethylformamide, acetonitrile, ethylene carbonate, tetrahydrofuran and dimethoxyethane.

These organic solvents can be used either individually or in combination (mixture).

Examples of suitable electrolytic substances to be dissolved in these solvents include metal cations; quaternary ammonium cations such as ammonium ion, tetramethylammonium ion and tetraethylammonium ion; and salts of cations such as carbonium cation and appropriate anions.

Examples of such anions include ClO₄⁻, BF₄⁻, PF₄⁻, PF₆⁻ and AsF₆⁻.

Specific examples of electrolytic substances include LiClO₄, BuN·ClO₄, NaBF₄ and EtN₄BF₄ (in the formula, Et represents ethylene).

In the use of an organic nonaqueous polar solvent, the concentration of electrolytic substance is preferably in the range of 0.5 to 3 M/L, still preferably 1 to 2 M/L.

The structure of representative electric double layer capacitor in which the present invention is utilized will now be described.

Figs. 1A to 1C show an embodiment of electric double layer capacitor of the present invention. As shown, the electric double layer capacitor 1 comprises two pressure boards 3,4 and, interposed therebetween, a pair of electrodes 5,6.

Aluminum meshes 7, 8 are bonded to the electrodes 5,6 at their pressure board sides, respectively. Ends of aluminum wires 9,10 are welded to the aluminum meshes, respectively. Separator 11 is interposed between the electrodes 5,6.

Each of the pressure boards 3, 4 is provided with four fixing protrusions 12,12,.. which protrude outwards from both side edges. The electrode sheets and separator are fixed between the pressure boards by polyester (Tetron) bands 13,13,.. wound round the protrusions 12,12,.., and immersed in the electrolyte.

By virtue of the foregoing process for producing a mesophase pitch based active carbon fiber and mesophase pitch based active carbon fiber according to the present invention, there can be provided a process for producing an active carbon fiber which, when used as an electrode material, not only can realize a high bulk density because of the small specific surface area but also exhibits excellent charging and discharging performance, especially capable of realizing large charge and discharge capacities per weight and per volume, and further there can be provided such an active carbon fiber and an electrode for electric double layer capacitor in which the active carbon fiber is used.

### EXAMPLES

The present invention will further be illustrated below with reference to the following Examples which in no way limit the scope of the invention.

### Example 1

Mesophase pitch having a Mettler softening point of 285°C, obtained by conducting a thermal treatment of cracked petroleum residue, was melt-blowing spun through a nozzle having a 2 mm wide slit in which a line of 1000 spinning orifices each having a diameter of 0.2 mm are arranged, to thereby obtain pitch fibers. The spun pitch fibers were collected on a belt having a collection zone of 35-mesh stainless steel net while sucking from the back of the belt.

The resultant collected pitch fiber mat was infusibilized in air at an average temperature rising rate of 4°C/min to thereby obtain infusibilized fibers. The infusibilized fibers were carbonized at 650°C in nitrogen gas and pulverized (milled) with the use of high-speed rotary mill so that the average particle size became 25 µm.

Potassium hydroxide was added to the milled carbon fibers in a weight ratio of 2:1 (potassium hydroxide : carbon fibers), homogeneously mixed and heated at 700°C in a nitrogen atmosphere for 2 hours to thereby effect an activation of the carbon fibers. Subsequently, cooling was made to room temperature, and the reaction product was poured into isopropyl alcohol. Thereafter, washing with water was performed until neutrality. Thus, active carbon fibers having a BET specific surface area of 850 m²/g were obtained.

The yield of active carbon fibers was as high as 77 wt.%.

The average pore radius of the active carbon fibers was 0.82 nm.

The properties of obtained active carbon fibers are listed in Table 1.

80 parts by weight of obtained active carbon fibers, 15 parts by weight of carbon black as a conductive material and 5 parts by weight of PTFE as a binder were mixed together. The thus obtained mixture was rolled into a sheet (thickness: 70 to 100 µm and electrode area: 2.5 cm²). Pieces of the resultant sheet were compression bonded to aluminum meshes, thereby obtaining electrodes. An electric double layer capacitor was prepared by using the obtained electrodes as positive and negative electrodes 5, 6 as shown in Figs. 1A to 1C, interposing a filter paper as a separator between the electrodes and charging an electrolyte composed of propylene carbonate containing 1 M lithium perchlorate as an electrolytic substance.

The potential difference between the electrodes 5,6 of this electric double layer capacitor was gradually increased from the state of 0 V to 2.5 V and to 3.5 V so so as to make each of the current densities 100 mA/cm². Upon reaching of the voltage to given value, discharging was effected at the same current density. The discharge capacity per weight (F/g) was measured with respect to each of the applied voltages.

Using an electric double layer capacitor prepared in the same manner, the potential difference between the electrodes 5,6 thereof was gradually increased from the state of 0 V to 3.5 V so as to make the current density 100 mA/cm². Upon reaching of the voltage to given value, discharging was effected at the same current density to thereby carry out a charge and discharge treatment. Thereafter, in the same manner, the discharge capacity per weight (F/g) was measured at an applied voltage of 2.5 V.

The obtained results are given in Table 1.

As seen from Table 1, the discharge capacity exhibited when the charging was performed at an applied voltage of 2.5 V was 26.3 F/g, while the discharge capacity exhibited when the charging was performed at an applied voltage of 3.5 V was 36.5 F/g. On the other hand, after the charge and discharge treatment at an applied voltage of 3.5 V, the discharge capacity exhibited when the charging was performed at an applied voltage of 2.5 V was 36. 3 F/g. Thus, the discharge capacity after the charge and discharge treatment was 38.0% greater than that without the treatment.

### Comparative Example 1

Active carbon fibers having a specific surface area of 880 m²/g were produced in the same manner as in Example 1, except that optically isotropic pitch having a Mettler softening point of 270°C, obtained by conducting a thermal treatment of cracked petroleum residue, was used as the pitch material. An electric double layer capacitor was prepared with the use of the active carbon fibers in the same manner as in Example 1, and the capacities of the capacitor were measured.

The results are also given in Table 1.

As seen from Table 1, the discharge capacity exhibited when the charging was performed at an applied voltage of 2.5 V was equivalent to that of Example 1. However, as different from Example 1, the discharge capacity increasing effect of the charge and discharge treatment at an applied voltage of 3.5 V was not recognized at all.

**Table 1**

| | | |
|---|---|---|
| | Example 1 | Comp. Ex. 1 |

| Carbon fiber | | |
|---|---|---|
| raw material pitch | mesophase pitch | isotropic pitch |
| carbonization temp. (°C) | 650 | 650 |

| Alkali activation | | |
|---|---|---|
| activation temp. (°C) | 700 | 700 |
| activation time (hr) | 2 | 2 |
| amt. of KOH (wt. ratio to CF) | 2 | 2 |

| Properties of active carbon fiber | | |
|---|---|---|
| sp. surface area (m²/g) | 850 850 | 880 880 |
| av. pore radius (nm) | 0.82 | 1.05 |
| yield (vs. CF) (wt.%) | 77 | 72 |

| Properties of capacitor | | |
|---|---|---|
| discharge capacity at 2.5 V charging (C_{A}) (F/g) | 26.3 | 26.9 |
| discharge capacity at 3.5 V charging (C_{B}) (F/g) | 36.5 | 27.0 |
| discharge capacity at 2.5 V charging (C_{C}) (F/g) after 3.5 V charge and discharge treatment | 36.3 | 26.9 |

| Capacity increase (%) | | |
|---|---|---|
| (C_{C}-C_{A})÷C_{A}x100 | 38.0 | 0 |

### Example 2 and Referential Example 1

Four varieties of active carbon fibers were produced in the same manner as in Example 1, except that the temperature for carbonizing the infusibilized fibers obtained in Example 1 in nitrogen gas was changed as specified in Table 2. Thereafter, electric double layer capacitors were prepared by way of trial with the use of the active carbon fibers and the capacities of the capacitors were measured, in the same manner as in Example 1.

The results are collectively given in Table 2.

**Table 2**

| | Example 2 | | Ref. | Ex. 1 |
|---|---|---|---|---|
| Carbon fiber raw material pitch carbonization temp. (°C) | mesophase pitch | | | |
| | 750 | 850 | 570 | 930 |
| Alkali activation | | | | |
| activation temp. (°C) | 700 | 700 | 700 | 700 |
| activation time (hr) | 2 | 2 | 2 | 2 |
| amt. of KOH (wt. ratio to CF) | 2 | 2 | 2 | 2 |

| Properties of active carbon fiber | | | | |
|---|---|---|---|---|
| sp. surface area (m²/g) | 70 | 35 | 1050 | 16 |
| av. pore radius (nm) | 0.95 | 0.79 | 1.03 | 0.82 |
| yield (vs. CF) (wt.%) | 80 | 85 | 70 | 85 |

| Properties of capacitor | | | | |
|---|---|---|---|---|
| discharge capacity at 2.5 V charging (C_{A}) (F/g) | 5.5 | 4.0 | 29.0 | 1.9 |
| discharge capacity at 3.5 V charging (C_{B}) (F/g) | 26.2 | 22.4 | 30.0 | 14.2 |
| discharge capacity at 2.5 V charging (C_{C}) (F/g) after 3.5 V charge and discharge treatment | 25.9 | 21.6 | 29.6 | 13.2 |

| Capacity increase (%) | | | | |
|---|---|---|---|---|
| (C_{C}-C_{A})÷C_{A}x100 | 371 | 440 | 2.1 | 594 |

### Example 3 and Comparative Example 2

Using the carbon fibers obtained at a carbonization temperature of 750 °C in the same manner as in Example 2, two varieties of active carbon fibers having different specific surface areas were produced in the same manner as in Example 1, except that the conditions for alkali activation of the carbon fibers were changed as specified in Table 3. Thereafter, electric double layer capacitors were prepared with the use of the active carbon fibers, and the capacities of the capacitors were measured, in the same manner as in Example 1.

The results are collectively given in Table 3.

**Table 3**

| | Example 3 | Comp. Ex: 2 |
|---|---|---|
| Carbon fiber raw material pitch carbonization temp. (°C) | mesophase pitch 750 | |
| Alkali activation | | |
| activation temp. (°C) | 700 | 700 |
| activation time (hr) | 2 | 1 |
| amt. of KOH (wt. ratio to CF) | 4 | 1 |

| Properties of active carbon fiber | | |
|---|---|---|
| sp. surface area (m²/g) | 400 | 20 |
| av. pore radius (nm) | 0.83 | 0.78 |
| yield (vs. CF) (wt.%) | 73 | 88 |

| Properties of capacitor | | |
|---|---|---|
| discharge capacity at 2.5 V charging (C_{A}) (F/g) | 26.2 | 1.2 |
| discharge capacity at 3.5 V charging (C_{B}) (F/g) | 41.7 | 13.5 |
| discharge capacity at 2.5 V charging (C_{C}) (F/g) after 3.5 V charge and discharge treatment | 40.5 | 12.6 |

| Capacity increase (%) | | |
|---|---|---|
| (C_{C}-C_{A})÷C_{A}x100 | 54.9 | 950 |

## Claims

1. A process for producing a mesophase pitch based active carbon fiber, comprising the steps of:
(I) carbonizing a mesophase pitch based infusibilized fiber in an inert gas at 600 to 900°C,
(II) activating the thus obtained carbon fiber in the presence of alkali in an inert gas at 500 to 900°C, cooling the reaction mixture to room temperature and removing unreacted alkali metal compound, and
(III) immersing the thus obtained mesophase pitch based active carbon fiber in an electrolyte and subj ecting the immersed mesophase pitch based active carbon fiber to such a charge and discharge treatment that a voltage gradually increased until exceeding 2.5 V is applied at a constant current density to the mesophase pitch based active carbon fiber so that an electric double layer is formed at an interface of the mespphase pitch based active carbon fiber and the electrolyte to thereby effect a charging and thereafter a discharging is effected at a constant current density.

2. The process as claimed in claim 1, wherein the mesophase pitch based active carbon fiber obtained in the step (II) has a BET specific surface area of 30 to 1200 m²/g.

3. The process as claimed in claim 2, wherein the mesophase pitch based active carbon fiber obtained in the step (II) has an average pore radius, calculated from t-plot of a nitrogen adsorption isotherm, of 0.2 to 1 nm.

4. The process as claimed in any of claims 1 to 3, wherein, in the step (III), the charging is performed by applying a voltage gradually increased to 3.5 V in the electrolyte.

5. A mesophase pitch based active carbon fiber for use in an electrode material of an electric double layer capacitor, obtainable by the process as claimed in any of claims 1 to 4.

6. The mesophase pitch based active carbon fiber as claimed in claim 5, which has a BET specific surface area of 30 to 1200 m²/g.

7. The mesophase pitch based active carbon fiber as claimed in claim 5 or 6, which has an average pore radius, calculated from t-plot of a nitrogen adsorption isotherm, of 0.2 to 1 nm.

8. The mescphase pitch based active carbon fiber as claimed in any of claims 5 to 7, which has after the step (III) an average pore radius not being significantly different from that before the step (III).

9. An electric double layer capacitor including an electrode comprising the mesophase pitch based active carbon fiber as claimed in any of claims 5 to 8.

## Patentansprüche

1. Verfahren zur Herstellung einer auf Mesophasenpech basierenden aktiven Kohlenstofffaser, umfassend die Schritte:
(I) Karbonisieren einer auf Mesophasenpech basierenden, unschmelzbar gemachten Faser in einem Inertgas bei 600 bis 900°C,
(II) Aktivieren der so erhaltenen Kohlenstofffaser in Gegenwart von Alkali in einem Inertgas bei 500 bis 900°C, Abkühlen des Reaktionsgemischs auf Raumtemperatur und Entfernen von nicht umgesetzter Alkalimetallverbindung, und
(III) Eintauchen der so erhaltenen, auf Mesophasenpech basierenden aktiven Kohlenstofffaser in einen Elektrolyt und Unterziehen der eingetauchten, auf Mesophasenpech basierenden aktiven Kohlenstofffaser einer derartigen Ladungs- und Entladungsbehandlung, dass eine Spannung, die allmählich erhöht wird, bis sie 2,5 V überschreitet, bei einer konstanten Stromdichte an die auf Mesophasenpech basierende aktive Kohlenstofffaser angelegt wird, so dass eine elektrische Doppelschicht an einer Grenzfläche der auf Mesophasenpech basierenden aktiven Kohlenstofffaser und dem Elektrolyt gebildet wird, um dadurch eine Ladung zu bewirken, woraufhin eine Entladung bei einer konstanten Stromdichte erfolgt.

2. Verfahren nach Anspruch 1, wobei die in Schritt (II) erhaltene, auf Mesophasenpech basierende aktive Kohlenstofffaser eine spezifische BET-Oberfläche von 30 bis 1200 m²/g aufweist.

3. Verfahren nach Anspruch 2, wobei die in Schritt (II) erhaltene, auf Mesophasenpech basierende aktive Kohlenstofffaser einen mittleren Porenradius, berechnet anhand der t-Kurve einer Stickstoffadsorptionsisotherme, von 0,2 bis 1 nm aufweist.

4. Verfahren nach einem der Ansprüche 1 bis 3, wobei die Ladung in Schritt (III) durch Anlegen einer Spannung, die allmählich auf 3,5 V erhöht wird, in dem Elektrolyt erfolgt.

5. Auf Mesophasenpech basierende aktive Kohlenstofffaser zur Verwendung in einem Elektrodenmaterial eines Kondensators mit elektrischer Doppelschicht, erhältlich durch das Verfahren nach einem der Ansprüche 1 bis 4.

6. Auf Mesophasenpech basierende aktive Kohlenstofffaser nach Anspruch 5, welche eine spezifische BET-Oberfläche von 30 bis 1200 m²/g aufweist.

7. Auf Mesophasenpech basierende aktive Kohlenstofffaser nach Anspruch 5 oder 6, welche einen mittleren Porenradius, berechnet anhand einer t-Kurve einer Stickstoffadsorptionsisotherme, von 0,2 bis 1 nm aufweist.

8. Auf Mesophasenpech basierende aktive Kohlenstofffaser nach einem der Ansprüche 5 bis 7, welche nach Schritt (III) einen mittleren Porenradius aufweist, der sich nicht wesentlich von dem vor Schritt (III) unterscheidet.

9. Kondensator mit elektrischer Doppelschicht, welcher eine Elektrode beinhaltet, die die auf Mesophasenpech basierende aktive Kohlenstofffaser nach einem der Ansprüche 5 bis 8 umfasst.

## Revendications

1. Procédé destiné à produire une fibre de carbone actif à base de brai mésophasique, comprenant les étapes consistant à :
(I) carboniser une fibre rendue non fusible à base de brai mésophasique dans un gaz inerte à une température de 600 à 900 °C,
(II) activer la fibre de carbone ainsi obtenue en présence d'un alcali dans un gaz inerte à une température de 500 à 900 °C, refroidir le mélange réactionnel jusqu'à température ambiante et éliminer le composé de métal alcalin n'ayant pas réagi, et
(III) immerger la fibre de carbone actif à base de brai mésophasique ainsi obtenue dans un électrolyte et soumettre la fibre de carbone actif à base de brai mésophasique immergée à un traitement de charge et de décharge de sorte qu'une tension progressivement augmentée jusqu'à ce qu'elle dépasse 2,5 V soit appliquée à une densité de courant constant à la fibre de carbone actif à base de brai mésophasique de sorte qu'un condensateur électrique à double couche soit formée au niveau d'une interface formée par la fibre de carbone actif à base de brai mésophasique et l'électrolyte pour effectuer ainsi une charge et par la suite une décharge est effectuée à une densité de courant constant.

2. Procédé selon la revendication 1, dans lequel la fibre de carbone actif à base de brai mésophasique obtenue à l'étape (II) a une surface spécifique BET de 30 à 1 200 m²/g.

3. Procédé selon la revendication 2, dans lequel la fibre de carbone actif à base de brai mésophasique obtenue à l'étape (II) a un rayon moyen de pore, calculé à partir du tracé t d'un isotherme d'adsorption d'azote, de 0,2 à 1 nm.

4. Procédé selon l'une quelconque des revendications 1 à 3, dans lequel, à l'étape (III), la charge est accomplie par application d'une tension progressivement augmentée jusqu'à 3,5 V dans l'électrolyte.

5. Fibre de carbone actif à base de brai mésophasique pour une utilisation dans un matériau d'électrode d'un condensateur électrique à double couche, pouvant être obtenue grâce au procédé selon l'une quelconque des revendications 1 à 4.

6. Fibre de carbone actif à base de brai mésophasique selon la revendication 5, qui a une surface spécifique BET de 30 à 1 200 m²/g.

7. Fibre de carbone actif à base de brai mésophasique selon la revendication 5 ou 6, qui a un rayon moyen de pore, calculé à partir du tracé t d'un isotherme d'adsorption d'azote, de 0,2 à 1 nm.

8. Fibre de carbone actif à base de brai mésophasique selon l'une quelconque des revendications 5 à 7, qui a, après l'étape (III), un rayon moyen de pore qui n'est pas significativement différent de celui avant l'étape (III)

9. Condensateur électrique à double couche comportant une électrode comprenant la fibre de carbone actif à base de brai mésophasique selon l'une quelconque des revendications 5 à 8.
